# EUROPEAN PATENT SPECIFICATION

(11) **EP 0 613 228 B1**
(45) Date of publication and mention of the grant of the patent: **22.07.1998**
(21) Application number: 94300826.8
(22) Date of filing: 04.02.1994
(51) Int. Cl.: H02K 23/40, H02K 1/12

(54) **Electrical machine with a frame providing a closed magnetic path and supporting the rotor shaft**
Elektrische maschine mit einem als geschlossener Magnetkreis wirkenden sowie die rotierende Welle aufnehmenden Gehäuse
Machine électrique avec boîtier ayant la fonction d'un cercle fermé de magnétisation et comprenant un arbre rotatif

(30) Priority: 22.02.1993 GB 9303488
(43) Date of publication of application: 31.08.1994
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Arthur, Bryan Edward

(56) References cited:
- EP-A- 0 116 380
- CH-A- 580 880
- FR-A- 1 333 566
- GB-A- 716 893
- GB-A- 1 124 722
- GB-A- 2 118 375
- US-A- 2 500 978

## Description

The present invention relates to electrical machines comprising: a frame having a pair of frame end members made of a good magnetic-inductive material; a rotor rotatably mounted in the frame end members with its axis of rotation lying in the median plane of the frame; and a pair of field poles constituted by individual iron cores and field windings around the field poles which serve to apply a field to the rotor, the frame end members forming a closed magnetic path between the pair of field poles.

GB 2118375 discloses a permanent magnetic stepping motor. The motor includes a rotor comprising a permanent magnet sandwiched between rotor yokes and mounted on a shaft. A stator surrounds the rotor and is magnetically excited by current through coils. A two part cover mutually supports the rotor and stator. The rotor shaft is held within cylindrical flanges of the casing by bearing. The casing is made of a ferro-magnetic material which entraps magnetic flux around the rotor and stator and thereby reduces leakage flux.

EP 0116380 discloses an electric motor having a stator made up of field poles and a rotor disposed between the poles which rotates with an axis of rotation perpendicular to the plane of the field poles. A close magnetic path is formed between the field poles.

CH 580880 discloses a permanent magnet electric motor in which a double-ended rotor is supported by two casing end members.

The present invention is characterised over the prior art, and in particular over GB 2118375 in that the rotor is an armature, in that the field windings are of a good magnetic-inductive material, and in that each frame end member includes a cylindrical structure of a non-inductive material around the armature mounting for preventing the formation of a magnetic loop along the armature.

The present invention has the following advantages over traditional motors:
1. The rotor can be exposed to obtain improved cooling;
2. The overall height of the motor is reduced thereby giving a compact arrangement:
3. Weight and manufacturing costs are reduced;
4. The surface of the exposed rotor can directly form a driving element for application of a special field.

FIG 1 is a diagram showing the construction of a motor according to the invention in which the frame end members form a closed magnetic path between the field poles; and
FIG 2 is a diagram showing a side view of the motor shown in FIG 1.

A motor according to the present invention includes a frame having a pair of frame end members, a rotor which rotates and mounted in the frame end members with its axis of rotation lying in the median plane of the frame, and a pair of field poles constituted by iron cores and field windings. A closed magnetic path between the field poles is formed by the frame end members.

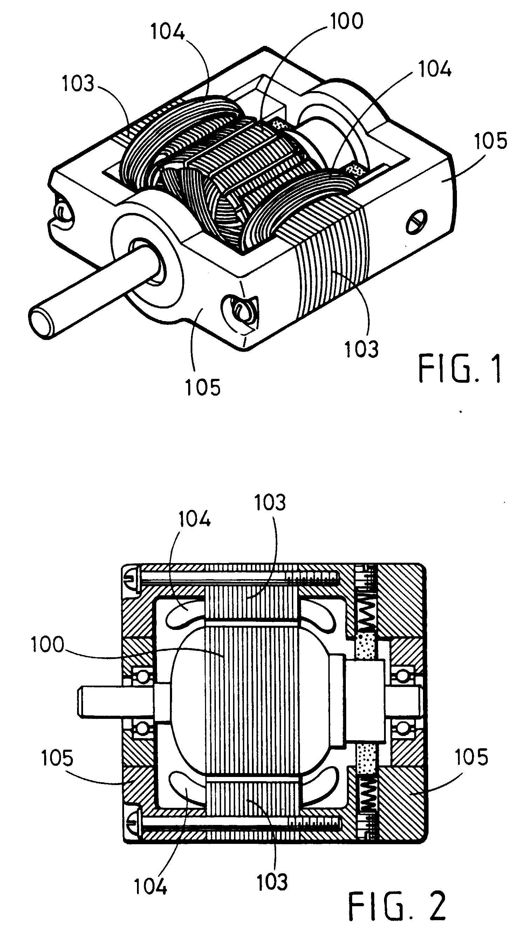

FIGS 1 & 2 show a motor according to the present invention. A motor rotor 100 of any of a number of different types is included. It maybe AC or DC brush or brushless permanent magnet or wound type rotor, and may include a conductive ring or commutator type arrangement. The rotor 100 may be in a cage arrangement, a disk, a column or a conical arrangement. The revolving surface of the rotor 100 is provided as a coupling field.

A pair of field poles are constituted by individual field iron cores 103 and field windings 104 of good magnetic-inductive material. The windings 104 are wound around the field poles and are in connection with the frame.

The frame includes a pair of frame end members 105 constructed of a good magnetic-inductive material (including no eddy current loss and magnetic hysteresis loss for AC use) which operates in combination with the rotor and the field poles.

The frame end members may be U-shaped with the magnetic poles securely retained by side clamping forces.

Each frame end member 105 includes a cylindrical structure of non-inductive material around the armature mounting for preventing the formation of a magnetic loop along the armature.

The invention therefore has various advantages including the omission of a magnetisation cycle circulating through the rotor and so the rotor can be exposed for ventilation. Where necessary some of the exposed rotor may directly form a drive element to adapt to special fields. In addition, the height of the motor in the direction of the exposed rotor is reduced to make it compact. In certain application, portions of the rotor will be sealed with a thin non-inductive sheet to prevent it from being damaged by dust and other air-borne particles.

## Claims

1. An electrical machine comprising:
a frame having a pair of frame end members (105) made of a good magnetic-inductive material;
a rotor (100) rotatably mounted in the frame end members (105) with its axis of rotation lying in the median plane of the frame;
a pair of field poles constituted by individual iron cores (103) and field windings (104) around the field poles which serve to apply a field to the rotor (100), the frame end members (105) forming a closed magnetic path between the pair of field poles, characterised in that the rotor (100) is an armature, in that the field windings (104) are of a good magnetic-inductive material, and in that each frame end member (105) includes a cylindrical structure of a non-inductive material around the armature mounting for preventing the formation of a magnetic loop along the armature.

2. An electrical machine as claimed in claim 1, wherein one frame end member (105) is a U-shaped member.

3. An electrical machine as claimed in claim 1 or 2, wherein each of the iron cores (103) is clamped in position between the two frame end members (105).

4. An electrical machine as claimed in claim 1 or 2, wherein each of the iron cores (103) is held in position between the two frame end members (105) by screw-threaded members passing through apertures in said core (103) and the frame end members (105).

## Patentansprüche

1. Elektrische Maschine, welche folgendes aufweist:
einen Rahmen mit einem Paar von Rahmenendstücken (105), welche aus einem gut magnetisch-induktiven Material hergestellt sind;
einen Rotor (100), welcher in den Rahmenendstücken (105) drehbar gelagert ist, wobei die Drehachse in der Mittelebene des Rahmens liegt;
ein Paar von Feldpolen, die von einzelnen Eisenkernen (103) und um die Feldpole gewickelte Feldwicklungen (104) gebildet werden, welche dazu dienen, ein Feld an den Rotor (100) anzulegen, wobei die Rahmenenstücke (105) einen geschlossenen Magnetkreis zwischen dem Feldpolpaar bilden, **dadurch gekennzeichnet,** daß der Rotor (100) ein Anker ist, die Feldwicklungen (104) aus einem gut magnetisch-induktiven Material bestehen, und daß jedes Rahmenendstück (105) ein zylindrisches Gebilde aus einem nicht-induktiven Material um die Ankerbefestigung umfaßt, um die Bildung einer magnetischen Schleife längs des Ankers zu verhindern.

2. Elektrische Maschine nach Anspruch 1, bei der ein Rahmenendstück (105) von einem U-förmigen Teil gebildet wird.

3. Elektrische Maschine nach Anspruch 1 oder 2, bei der jeder Eisenkern (103) in seiner Position zwischen den beiden Rahmenendstücken (105) eingespannt ist.

4. Elektrische Maschine nach Anspruch 1 oder 2, bei der jeder Eisenkern (103) in seiner Position zwischen den beiden Rahmenendstücken (105) mittels Gewindeteilen gehalten ist, welche durch die Öffnungen in dem Kern (103) und den Rahmenendstücken (105) gehen.

## Revendications

1. Une machine électrique comprenant:
- un cadre présentant des organes d'extrémité de cadre (105) réalisé en un matériau présentant une bonne inductivité magnétique;
- un rotor (100) monté à rotation dans les organes d'extrémité de cadre (105), l'axe de rotation du rotor étant situé dans le plan médian du cadre;
- deux pièces polaires constituées d'éléments individuels du circuit fer (103) et des bobinages d'excitation (104) autour des pièces polaires, servant à appliquer un champ au rotor (100), les organes d'extrémité de cadre (105) formant un circuit magnétique fermé entre les deux pièces polaires, caractérisée en ce que le rotor (100) est un induit, en ce que les bobinages d'excitation (104) sont réalisés en un matériau présentant une bonne inductivité magnétique, et en ce que chaque organe d'extrémité de cadre (105) comprend une structure cylindrique en un matériau non-inductif autour des moyens de montage de l'induit, pour empêcher la formation d'une boucle magnétique passant par l'induit.

2. Une machine électrique selon la revendication 1. dans laquelle un organe d'extrémité de cadre (105) est un organe en forme de U.

3. Une machine électrique selon la revendication 1 ou 2. dans laquelle chacun des éléments individuels du circuit fer (103) est serré en position entre les deux organes d'extrémité de cadre (105).

4. Une machine électrique selon la revendication 1 ou 2. dans laquelle chacun des éléments (103) du circuit fer est maintenu en position entre les deux organes d'extrémité de cadre (105) par des organes filetés traversant des ouvertures dans lesdits éléments du circuit fer (103) et des organes d'extrémité de cadre (105).
